# EUROPÄISCHE PATENTSCHRIFT

(11) **EP 1 050 157 B1**
(45) Veröffentlichungstag und Bekanntmachung des Hinweises auf die Patenterteilung: **24.04.2002**
(21) Anmeldenummer: 98907992.6
(22) Anmeldetag: 26.01.1998
(51) Int. Cl.: H04M 15/00, H04M 17/00

(54) **VERFAHREN UND VORRICHTUNG ZUM ABRECHNEN VON GEBÜHREN IN TELEKOMMUNIKATIONSNETZEN**
METHOD AND DEVICE FOR CALCULATING CHARGES IN TELECOMMUNICATIONS NETWORKS
PROCEDE ET DISPOSITIF POUR LE DECOMPTE DE TAXES DANS DES RESEAUX DE TELECOMMUNICATION

(43) Veröffentlichungstag der Anmeldung: 08.11.2000
(73) Patentinhaber: E-Plus Mobilfunk GmbH & Co. KG, 12349 Berlin (DE)
(72) Erfinder: ERGEZINGER, Siegfried, D-40822 Mettmann (DE)
(74) Vertreter: Beyer, Rudi
(86) Internationale Anmeldenummer: EP9800419
(87) Internationale Veröffentlichungsnummer: WO9938313

(56) Entgegenhaltungen:
- EP-A- 0 698 987
- EP-A- 0 794 651
- DE-A- 4 312 362
- DE-A- 19 528 423
- US-A- 5 359 642

## Beschreibung

Die Erfindung betrifft ein Verfahren zum Abrechnen von Gebühren in Tefekommunikationsnetzen.

Des weiteren betrifft die Erfindung eine Vorrichtung zum Durchführen des erfindungsgemäßen Verfahrens.

Verfahren zum Abrechnen von Gebühren in Telekommunikationsnetzen sind vorbekannt.

Gegenstand der nicht vorveröffentlichten eigenen europäischen Patentanmeldung 96 119 966.8 bildet ein Verfahren zum Aufladen bzw. Nutzbarmachen einer Telefonkarte für mindestens ein in einem Mobilfunknetz, gegebenenfalls zusammen mit einem Festtelefonnetz, verwendbares Handy, bei welchem die Telefonkarte nicht selbst, sondern indirekt nur im Netz mit einem vorgegebenen Wertbetrag aufgeladen wird. Die Aufladung dieser Telefonkarte kann in einer Diensteplattform, zum Beispiel eine Diensteplattform für Intelligente Netze (IN), Service Mode wie VASS (Value Added Services System) oder die mobile Vermittlungsstation (MSC), vorgenommen werden. Dabei wird die Telefonkarte vom Kunden selbst über eine spezielle Rufnummer telefonisch aufgeladen.

Die nicht vorveröffentlichte europäische Patentanmeldung beschreibt hierzu einen vorbestimmten Verfahrensgang und auch eine Sicherheitsprüfung, die in verschiedenen Prüfschritten vorgenommen wird. Das nicht vorveröffentlichte Verfahren erfolgt unter Zuhilfenahme einer Kreditkarte, die in Kooperation mit einem Dritten, der als Emittent auftritt, ausgeben wird.

In der nicht vorveröffentlichten eigenen europäischen Patentanmeldung ist außerdem eine Vorrichtung zum Durchführen des dortigen Verfahrens beschrieben, die ein Mobilfunktelefonnetz umfaßt, das gegebenenfalls mit einem Festtelefonnetz zusammenarbeitet, in welchem enthalten sind: NIM, MSC, HLR, VMSC, SMSC, eine Diensteplattform, z. B. VASS, AdC mit Gc-WA, CSC, BSC, BTS, Kreditkartensystem (Credit Card System) und mindestens ein Handy mit einer Telefonkarte, die wiederaufladbar bzw. wiederbenutzbar zu machen ist, gegebenenfalls unter Einbeziehung eines Festnetztelefons.

Des weiteren sind wiederaufladbare Wegwerfkarten in der Beschreibung der oben erwähnten eigenen europäischen Patentanmeldung als Stand der Technik gewürdigt.

Aus der EP 0 698 987 A2 und in der GB-A-2 215 897 A sind ebenfalls Verfahren zum Wiedernutzbarmachen von Telefonkarten beschrieben.

Die WO 93/03571 A betrifft allgemein ein Verfahren zur Vorausbezahlung von Telekommunkationsgebühren.

Aus der DE-A-43 12 362 A1 ist ein Mobilfunknetz mit Guthabenkonten vorbekannt, mit einer Funkvermittlungsstelle und mit einer Teilnehmerdatei, mittels derer ankommende Rufe von solchen Mobilfunk-Teilnehmern, denen jeweils ein Guthabenkonto zugeordnet ist, selektiert werden und mit Netzelementen eines Intelligenten Netzes, mittels derer die selektierten Rufe vermittelt und vergebührt werden.

Aus der DE-A-44 12 727 A1 ist ein Verfahren und eine Vorrichtung zum Abrechnen von Gebühren in einem Mobilfunksystem vorbekannt. Zum Abrechnen von Gebühren in einem solchen Mobilfunksystem, bei dem eine Mehrzahl von Mobilfunkstationen, Basisstationen und Mobilfunk-Vermittlungsstellen vorgesehen sind, sind die Mobilfunk-Vermittlungsstellen mit einem Debitzentrum verbindbar. Das Debitzentrum erhält im Rahmen einer Vorvergebührung jeweils vorgebbare Aufladungsbeträge von einem Bankinstitut. Bei der Inanspruchnahme von Diensten durch die Mobilstation werden diese Beträge abgebucht. Die Vorvergebührung erfolgt unter Verwendung eines Intelligenten Netzes, bei dem das Debitzentrum als Teil einer Dienstesteuerstelle ausgebildet ist und mit Übertragungseinrichtungen eines Geldinstituts verbindbar ist, und bei dem die Mobilfunk-Vermittlungsstellen die Funktionen von Dienstezugangs-Vermittlungsstellen des Intelligenten Netzes durchführen.

Die DE-A-44 19 651 A1 betrifft ebenfalls ein Verfahren und eine Vorrichtung zum Berechnen von Gebühren für eine von einem Teilnehmer über eine Mobilstation angeforderte Verbindung in einem zellularen Mobilfunknetz. Dabei werden in zeitlichem Zusammenhang mit dem Aufbau, dem Bestehen und der Beendigung der Verbindung Basisdaten, welche Ursprung und Ziel, Art des Dienstes, Beginn und Ende betreffen, von einer der Mobilstation jeweils zugeordneten Mobil-Vermittlungsstelle zu einer Gebührenerfassungsstelle übertragen. Die Gebührenerfassungsstelle fragt Teilnehmerdaten von einer für den Teilnehmer zuständigen Datenbank ab, wobei diese Teilnehmerdaten Informationen über ein Guthaben des Teilnehmers enthalten. In der Gebührenerfassungsstelle werden während der Verbindung aus den Basisdaten laufend Gebühren berechnet und von dem Guthaben subtrahiert.

Der Erfindung liegt die Aufgabe zugrunde, ein Verfahren zu schaffen, das insbesondere die einfache Nutzung aller Auflademöglichkeiten des Mobilfunk-Festnetz-Kontos aus dem Festnetz und dem Mobilfunknetz heraus gestattet.

Des weiteren liegt der Erfindung die Aufgabe zugrunde, eine Vorrichtung zum Durchführen des erfindungsgemäßen Verfahrens zu schaffen.

Die Aufgabe hinsichtlich des Verfahrens wird durch die in **Patentanspruch 1** wiedergegebenen Merkmale gelöst.

Weitere erfinderische Ausgestaltungen sind in den **Patentansprüchen 2** bis **10** beschrieben.

Das erfindungsgemäße Verfahren basiert auf einer Vergebührung mittels wiederaufladbarer Guthabenkonten durch Vorausbezahlung im Festnetz und im Mobilfunknetz und bezieht sich auf eine kostengünstige Realisierung einer Festnetz/Mobilfunkintegration. Diese Integration erfolgt durch die Zuordnung von einer oder mehreren Mobilfunknummern zu einer und mehreren Festnetzrufnummern.

Ein weiterer Vorteil liegt in der leichten Handhabung, und zwar sowohl aus der Sicht des Netzbetreibers, als auch aus der Sicht des Endkunden (Nutzers).

Ein besonderer Vorteil liegt in der Möglichkeit der Selbstadministration des Verfahrens durch den Kunden, also zum Beispiel in der Wiederaufladbarkeit seines Kontos und in der Nutzung der beanspruchten Dienstestellen. Die Zuordnung der Mobilfunk- und Festnetznummern kann dabei zeitlich und geographisch bedingt durch die Mobilität des Teilnehmers verschiedenen Zuordnungsprofilen unterliegen, also nach Ort, Zeit und beanspruchtem Endteil verschieden sein. Die Rufnummerzuordnung und somit die Zuordnungsprofile können erfindungsgemäß durch die Kunden geändert und verwaltet werden.

Die Telekommunikationsendgeräte brauchen nicht im selben Telekommunikationsnetz angeordnet sein, um die Vorteile der erfindungsgemäßen Telekommunikationsverbindungen zu nutzen, wobei es sich um mindestens zwei Telekommunikationsendgeräte handeln muß, die jeweils in einem Telekommunikationsnetz eingebunden sind und über eine Verbindung zu der jeweiligen vermittelnden Einheit des Telekommunikationsnetzes verfügen.

Soweit in den Anmeldungsunterlagen der Begriff "Telekommunikationsendgeräte" verwendet wird, sind darunter handelsübliche Festnetztelefone, Telefaxgeräte, Mobilfunkgeräte usw. sowie Kombinationen dieser Endgeräte zu verstehen.

Unter einer Telekommunikationsverbindung wird dabei eine Nachrichtenverbindung zwischen mindestens zwei Punkten verstanden, die sowohl über eine Kabelverbindung wie Fernsprechkabel, Ortkabel, Teilnehmerkabel, Bezirkskabel, Gartenkabel, CATV-Kabel oder über eine kabellose Verbindung wie GSM 900, GSM 18000, DECT, CTS, Richtfunkverbindungen, akustische oder optische Signalübertragung oder über eine Kombination dieser Nachrichtenverbindungen realisiert werden kann.

Innerhalb dieser Netzzusammenschaltung ist mindestens eine erfindungsgemäße Gebührenerfassungseinheit im Mobilfunknetz angeordnet und über eine Telekommunikationsverbindung mit der Vermittlungszentrale verbunden.

Prinzipiell genügt dabei die Verknüpfung eines Festnetzes und eines Mobilfunknetzes über einen, vorzugsweise über eine Vielzahl von Netzverbindungspunkten. Es ist dabei auch möglich, die verschiedenen Netze über Netzverbindungspunkte miteinander so zu verknüpfen, daß es zu einer Integration der Netzverbindungspunkte für alle in Frage kommenden Verkehrsflüsse kommt.

Jedes Teilnehmerendgerät kommuniziert dabei mit einer Vermittlungszentrale über eine der oben beschriebenen Telekommunikationsverbindungen.

Das Festnetz kann aus einem, zwei oder aus mehreren Ortsnetzen bestehen, die über eine Fernverbindung gekoppelt sind.

Für jede Verbindung werden aus einem Teilnehmerregister, das im Mobilfunknetz angesiedelt ist, Daten abgefragt, die für die Gebührenberechnung relevant sind. Es ist mit Hilfe des erfindungsgemäßen Verfahrens somit möglich, verschiedene Gebührenmodelle für verschiedene Teilnehmer oder Teilnehmergruppen zugrundezulegen.

Eine Verbindung aus dem Festnetz oder dem Mobilfunknetz, die nicht durch ein Guthaben abgedeckt ist, kann bei dem erfindungsgemäßen Verfahren in einfacher Weise dadurch verhindert werden, daß die Übertragung der Daten an die Gebührenerfassungsstelle und die Anforderung der Teilnehmerdaten aus der Datenbank durch die Gebührenerfassungsstelle bereits bei der Anforderung einer Verbindung erfolgt und bei fehlendem Guthaben der Aufbau der geforderten Verbindung unterbleibt oder eine Verbindung zum CSC (Customer Service Center) etabliert wird.

Das erfindungsgemäße Verfahren kann alternativ zu herkömmlichen Gebührenermittlungen durchgeführt werden. So kann beispielsweise der Netzbetreiber den einzelnen Teilnehmern zur Wahl stellen, nach welchem Verfahren die Gebühren berechnet werden. Das erfindungsgemäße Verfahren besitzt außerdem den Vorteil, daß es die Strukturen der vorhandenen Mobilfunknetze und Festnetze im wesentlichen nutzt und nur einen geringen zusätzlichen Aufwand erfordert.

Ferner bietet das erfindungsgemäße Verfahren für jeden Nutzer eines Teilnehmernetzes die Möglichkeit, den Verbindungsnetzbetreiber über eine dauerhafte Voreinstellung oder auch im Einzelfall frei auswählen zu können. Jedes Teilnehmerkommunikationsendgerät, das eine Verbindung zu einem Anschluß in einem anderen Teilnehmernetz aufbauen will, kann dieses mit Hilfe einer Verbindungsnetzbetreiberkennzahl, zum Beispiel 01077, durchführen.

Erfolgt ein Ortswechsel eines Teilnehmers, so sind die Vorwahllisten und die dazugehörigen Profile für einen Verbindungsaufbau aus der neuen Örtlichkeit unter Umständen nicht mehr optimal eingestellt. Die Erfindung sieht deshalb vor, daß bei einem Ortswechsel oder bei der Erstbenutzung mit einem derartig ausgeführten Telekommunikationsendgerät eine Meldung an das Mobilfunknetz ergeht. Diese Meldung erhält alle wichtigen Daten, um ankommende Rufe richtig an den Teilnehmer zustellen zu können. So kann zum Beispiel anhand der CLI festgestellt werden, wo sich der Teilnehmer zur Zeit der erfolgten Meldung befindet. Die Information kann dazu benutzt werden, um die Datensätze in der Datenbank neu zu überprüfen und bei Bedarf neue Vorwahllisten für das Endgerät zu errechnen.

Sollte der Teilnehmer sich bereits an diesem Ort aufgehalten und Profile gespeichert haben, die für Telefonverkehr aus dem neuen Ort heraus zugrundegelegt werden müssen, so wird durch automatische Erkennung und Anpassung eine optimale Konstellation geschaffen, aus der der Kunde wieder ohne Mehraufwand die günstigste Verbindung automatisch aufbauen kann.

Die Selbstadministration läßt sich wie folgt darstellen:

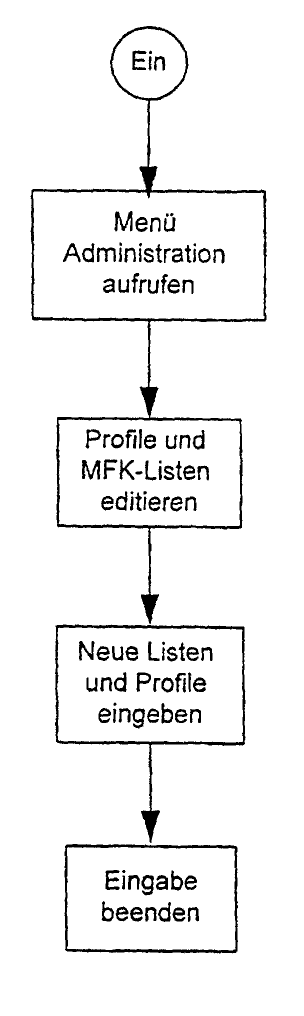

Gemäß **Patentanspruch 9** eignet sich die Erfindung besonders zum Einsatz eines integrierten Telekommunikationsendgerätes wie zum Beispiel eines DECT-GSM Dual Mode-Endgerätes. Eine Verbindung zwischen Endgeräten kann über unterschiedliche Wege etabliert werden. Dabei werden jeweils andere Verbindungsnetze involviert. Die hier vorgeschlagenen Verfahren und Vorrichtungen sehen eine automatische Auswahl der zur Zeit des Gesprächsaufbaus für den Kunden und für die in diese Verbindung involvierten Netze die günstigste Konstellation vor. Hierzu werden die Vorwahlnummern der möglichen VNB in das Endgerät des Kunden heruntergeladen und gespeichert. Gemäß einem Algorithmus wird bei der Eingabe der Vorwahl der entsprechend für diese Verbindung günstigste VNB gesucht und die Verbindung zu diesem weitergeleitet mit der gewünschten Zieladresse zum Zielteilnehmernetz.

Die Aufgabe hinsichtlich der Vorrichtung zur Durchführung des erfindungsgemäßen Verfahrens wird durch die Merkmale des **Patentanspruches 11** gelöst.

Weitere erfinderische Ausgestaltungen hinsichtlich der Vorrichtung sind in den **Patentansprüchen 12** und **13** beschrieben.

Die Erfindung eignet sich insbesondere zum Einsatz eines integrierten Telekommunikationsendgerätes wie zum Beispiel eines DECT-GSM Dual-Mode-Endgerätes. Eine Verbindung zwischen Endgeräten kann über unterschiedliche Wege etabliert werden. Dabei werden jeweils andere Verbindungsnetze involviert.

Die Mobilität läßt sich wie folgt darstellen:

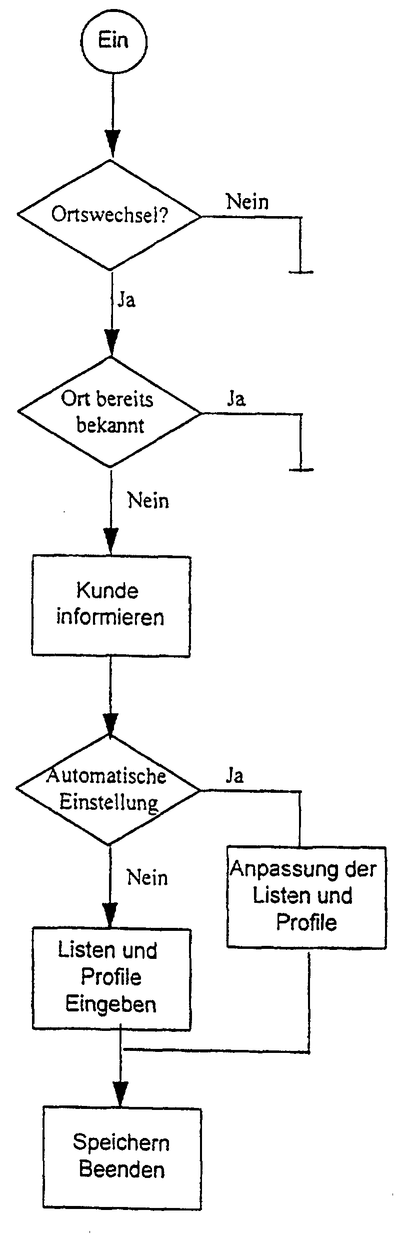

Für das Herunterladen der Vorwahlnummern zu den Telekommunikationsendgeräten ist erfindungsgemäß eine Datenbank, welche in einem oder mehreren Netzen oder Netzteilen angesiedelt sein kann, vorgesehen. Ferner muß ein Rechner bei Bedarf auf diese Datenbank zugreifen und die entsprechenden Daten an den Teilnehmer über geeignete Übertragungswege schicken und so die Datensätze im Endgerät aktualisieren. Die Übertragung ist zum Beispiel über Signalisierungen wie SMS, USSD, über Daten Kanäle wie 9.6kbit/s usw. sowie über DTMF-Töne möglich. Eine Voraussetzung hierfür ist, daß das Endgerät so konzipiert ist, daß ein Betreiben sowohl über das TNB-Netz, als auch über das VNB-Netz möglich ist. Solche Endgeräte sind schon bekannt und werden als Dual-Mode-Endgeräte oder als Multi-Mode-Endgeräte bezeichnet.

In der Zeichnung ist die Erfindung anhand von Ausführungsbeispielen - teils schematisch - veranschaulicht. Es zeigen:
- Fig. 1: mit einem Mobilfunknetz verknüpftes Festnetz in schematischer Darstellung,
- Fig. 2: eine ähnliche Darstellung wie Fig. 1, allerdings mit zwei als Ortsnetze ausgebildeten Festnetzen, die über eine Fernverbindung gekoppelt sind und die ihrerseits über eine als Nachrichtenverbindung ausgebildete Telekommunikationsverbindung mit einem Mobilfunknetz integriert sind;
- Fig. 3: eine Einzelheit aus einem Netz;
- Fig. 4: den Einsatz von integrierten Telekommunikationsendgeräten;
- Fig. 5: den Einsatz von Endgeräten bei geographischer Verlagerung beim Einsatz sowohl in einem TNB-Netz als auch in einem VNB-Netz und
- Fig. 6: den Ortswechsel eines Teilnehmers.

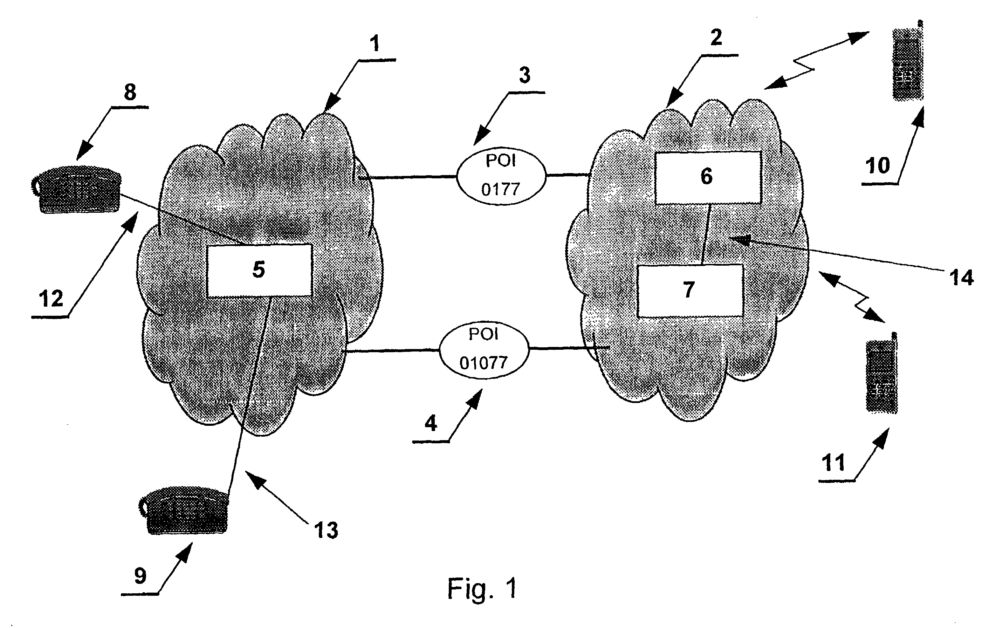

Bei der Ausführungsform nach Fig. 1 ist mit dem Bezugszeichen 1 ein nur schematisch angedeutetes Festnetz bezeichnet, während 2 ein Mobilfunknetz darstellt.

Das Festnetz 1 und Mobilfunknetz 2 sind bei der dargestellten Ausführungsform über zwei Netzverbindungen 3 und 4 miteinander verknüpft. Diese Netzverbindungen werden auch mit POI = Point of Interconnection bezeichnet. Das Festnetz 1 und das Mobilfunknetz 2 können natürlich über eine Vielzahl solcher POI miteinander in Verbindung stehen, so daß die verschiedenen Netze über POI miteinander verknüpft sind, so daß es zu einer Integration der Netzverbindungspunkte für alle in Frage kommenden Verkehrsflüsse kommt.

Zur klareren Darstellung sind in Fig. 1 für das Festnetz 1 und für das Mobilfunknetz 2 jeweils nur eine Vermittlungszentrale 5 bzw. 6 dargestellt.

Das Mobilfunknetz 2 verfügt ferner über eine Gebührenerfassungsstelle 7 zum Durchführen des erfindungsgemäßen Verfahrens.

Jedes Teilnehmerendgerät 8 bzw. 9 des Festnetzes 1 bzw. 10 bzw. 11 des Mobilfunknetzes 2 kommuniziert mit einer der Vermittlungszentralen 5 bzw. 6 über eine Telekommunikationsverbindung 12 bzw. 13 bzw. auf dem Funkwege.

Die Gebührenerfassungseinheit 7 in dem Mobilfunknetz 2 ist über eine Telekommunikationsverbindung 14 mit der Vermittlungszentrale 6 verbunden.

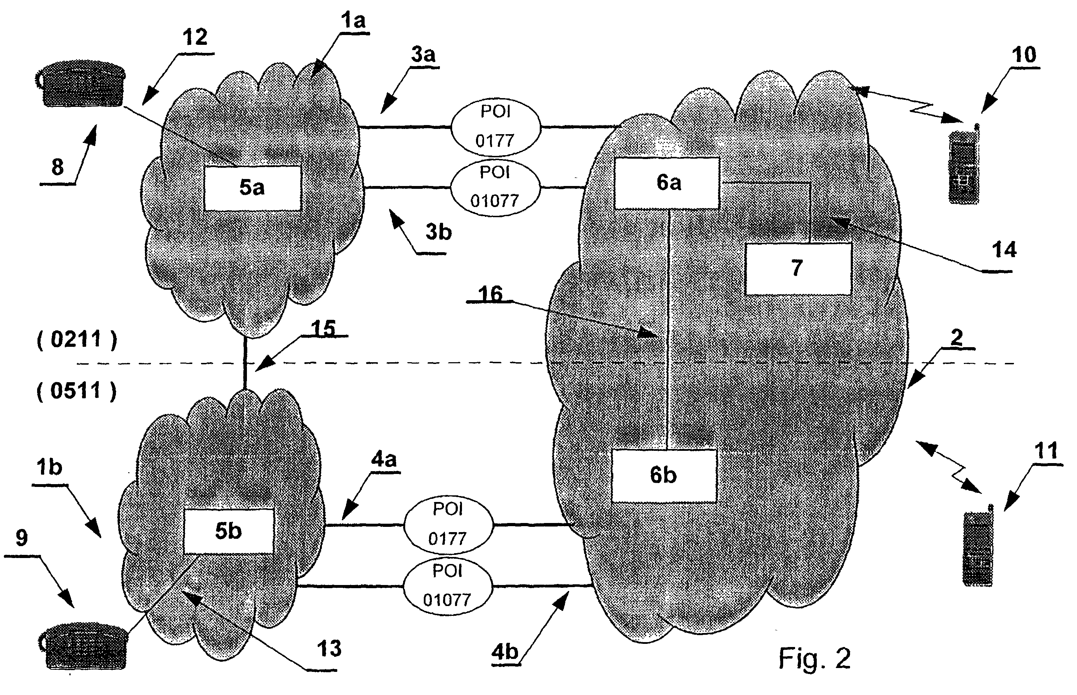

Bei der Ausführungsform nach Fig. 2 sind für Teile gleicher Funktion die gleichen Bezugszeichen verwendet worden. Das Festnetz besteht in diesem Fall aus den zwei Ortsnetzen 1a und 1b, die über eine Fernverbindung 15 gekoppelt sind.

Die Ortsnetze 1a und 1b können unterschiedliche Ortsvorwahlen haben. Wie man aus Fig. 2 erkennt, ist das Ortsnetz 1a durch die Netzverbindungen 3a bzw. 3b und das Ortsnetz 1b durch die Netzverbindungen 4a bzw. 4b mit dem Mobilfunknetz 2 gekoppelt. Deshalb sind in Fig. 2 insgesamt vier POI dargestellt. Selbstverständlich kann auch in diesem Fall die Anzahl der POI erheblich größer sein als dies aus Fig. 2 hervorgeht.

Die Ortsnetze 1a und 1b weisen Vermittlungszentralen 5a bzw. 5b auf, während das Mobilfunknetz 2 zwei Vermittlungszentralen 6a bzw. 6b besitzt, die durch eine Telekommunikationsverbindung 16 miteinander gekoppelt sind. Statt jeweils zwei Netzverbindungen 5a, 5b bzw. 6a, 6b kann die Anzahl dieser Netzverbindungszentralen auch kleiner oder erheblich größer als dargestellt sein.

Aus Fig. 2 ist ferner zu erkennen, daß der Netzverbindungszentrale 6a des Mobilfunknetzes 2 eine Gebührenerfassungsstelle 7 zugeordnet ist, die wiederum über eine Telekommunikationsverbindung 14 mit der zugeordneten Vermittlungszentrale 6a in Verbindung steht. Selbstverständlich kann die Anzahl der Gebührenerfassungsstellen größer als dargestellt sein. Zum Beispiel ist es möglich, auch der Vermittlungszentrale 6b eine derartige Gebührenerfassungsstelle zuzuordnen.

Aus Fig. 2 ist zu entnehmen, daß das Mobilfunknetz 2 ein Verbindungsnetz darstellt, da es bei der dargestellten Ausführungsform zwei Telekommunikationsendgeräte 10 und 11, im Bedarfsfalle selbstverständlich auch eine Vielzahl von Telekommunikationsendgeräten, die jeweils an eines der Teilnehmernetze angeschlossen sind, verbindet. Jeder Benutzer eines Telekommunikationsnetzes hat die Möglichkeit, den Verbindungsnetzbetreiber über eine dauerhafte Voreinstellung oder im Einzelfall auch frei auswählen zu können.

Jedes Teilnehmerkommunikationsendgerät 8, 9 bzw. 10, 11, das eine Verbindung zu einem Anschluß in einem anderen Teilnehmernetz aufbauen will, kann dieses mit Hilfe einer Verbindungsnetzbetreiberkennzahl, zum Beispiel 01077, durchführen (Fig. 2), während diese Verbindungsneizbetreiberkennzahl bei der Ausführungsform z. B. nach Fig. 1 0177 beträgt.

Für jede Verbindung werden aus einem Teilnehmerregister, das im Mobilfunknetz 2 angesiedelt ist, Daten abgefragt, die für die Gebührenberechnung in der Gebührenerfassungsstelle 7 relevant sind. Es ist mit Hilfe des erfindungsgemäßen Verfahrens möglich, verschiedene Gebührenmodelle für verschiedene Teilnehmer oder Teilnehmergruppen zugrundezulegen.

Die bereits eingangs beschriebene Selbstadministration erlaubt es dem Kunden, die Zuordnung der Mobilfunk- oder Festnetznummern zeitlich und/oder geographisch, bedingt durch die Mobilität des Teilnehmers, zu ändern. Dabei können sowohl die Rufnummernzuordnung, als auch die Zuordnungsprofile durch den Kunden geändert und verwaltet werden. Hierzu wird jedem Kunden ein Datensatz zugeordnet, der eine oder mehrere Mobilfunkrufnummern mit einer oder mehreren Festnetzrufnummern miteinander verknüpft. Darüber hinaus wird eine dem Teilnehmer zugeordnete Festnetz- oder Mobilfunkrufnummer als Referenznummer eingetragen. Auf diese Weise wird erreicht, daß mehrere Rufnummern aus dem Mobilfunknetz 2 und aus dem Festnetz 1 ein gemeinsames wiederaufladbares Guthabenkonto für vorausbezahlte Telekommunikationsverbindungen nutzen können, das in der Gebührenerfassungsstelle 7 verwaltet wird. Die Rufnummern können in Listen gespeichert werden und jederzeit vom Kunden selbst aus dem Festnetz 1 oder aus dem Mobilfunknetz 2 jeweils aus der eigenen oder aus einer fremden Telekommunikationseinrichtung geändert, aktiviert und deaktiviert werden. Dabei kann die Administration dieser Daten über eine kostenlose Mobilfunknummer und/oder über eine entsprechende Servicenummer auch aus dem Festnetz 1 geschehen. Die Authentisierung des Kunden kann über CLI und/oder über eine persönliche Geheimnummer (PIN) erfolgen.

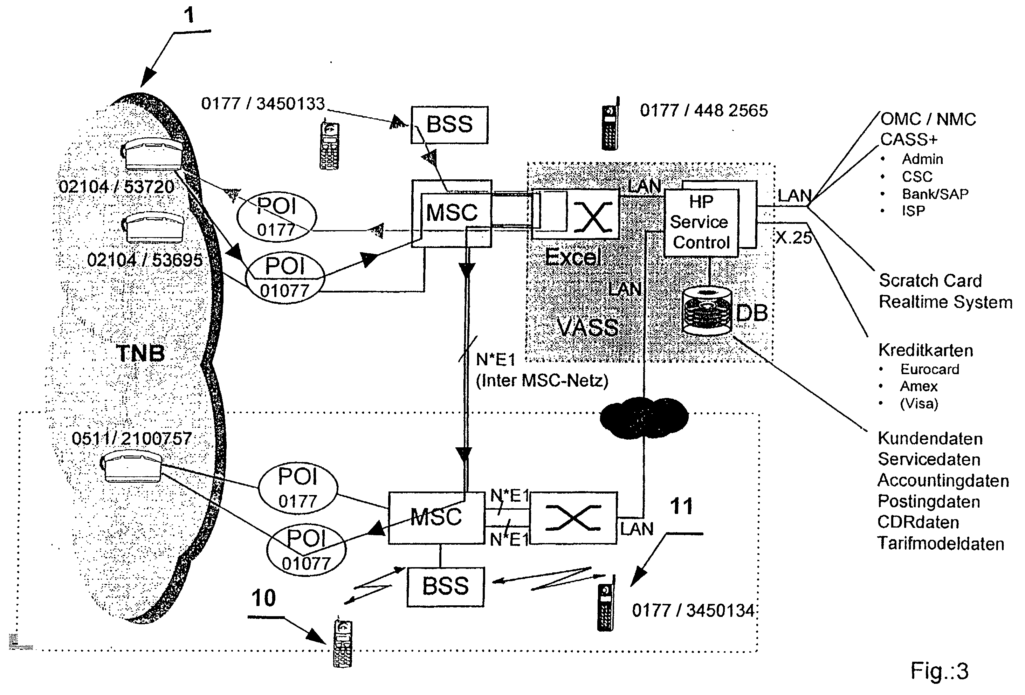

Fig. 3 zeigt die Verknüpfung eines Festnetzes 1 zur Datenverwaltung bzw. zur Gebührenabrechnung in schematischer Darstellung.

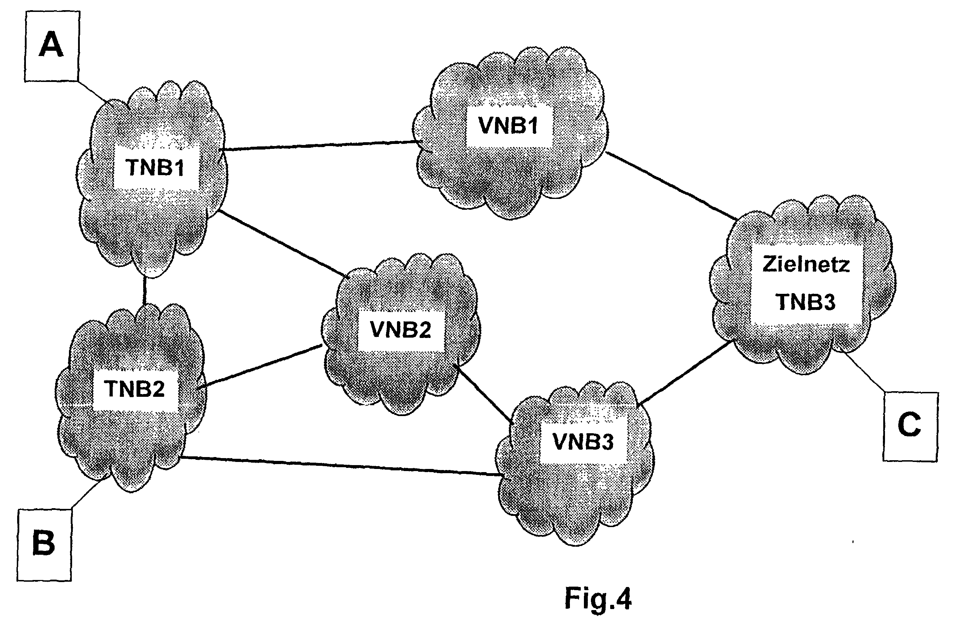

In Fig. 4 ist der Einsatz eines integrierten Telekommunikationsgerätes wie zum Beispiel eines DECT-GSM Dual-Mode-Endgerätes veranschaulicht. In Fig. 4 sind drei solcher Telekommunikationsendgeräte dargestellt und mit den Buchstaben A, B und C gekennzeichnet.

Das Endgerät A ist an ein Teitnehmernetz TNB1 angeschlossen, Endgerät B ist an ein Teilnehmernetz TNB2 angeschlossen und Endgerät C an ein Teilnehmernetz TNB3. Diese Teilnehmernetze TNB1, TNB2 und TNB3 sind beispielsweise über Vermittlungsnetzbetreiber VNB1, VNB2 und VNB 3 miteinander verknüpft. Hierbei kann es sich um als Ortsnetze ausgebildete Festnetze und/oder um Mobilfunknetze handeln.

Eine Verbindung zwischen dem Endgerät A und dem Endgerät B oder dem Endgerät C kann über unterschiedliche Wege erfolgen. Dabei werden jeweils andere Verbindungsnetze involviert. Das hier vorgeschlagene Verfahren sieht eine automatische Auswahl der zur Zeit des Gesprächsaufbaus für den Kunden und für die in diese Verbindung involvierten Netze günstigste Konstellation vor. Hierzu werden die Vorwahlnummern der möglichen VNB in das Endgerät des Kunden heruntergeladen und gespeichert. Durch einen Algorithmus wird bei der Eingabe der Vorwahl der entsprechend für diese Verbindung günstigste VNB gesucht und die Verbindung zu diesem weitergeleitet, mit der gewünschten Zieladresse beim Zielteilnehmernetz.

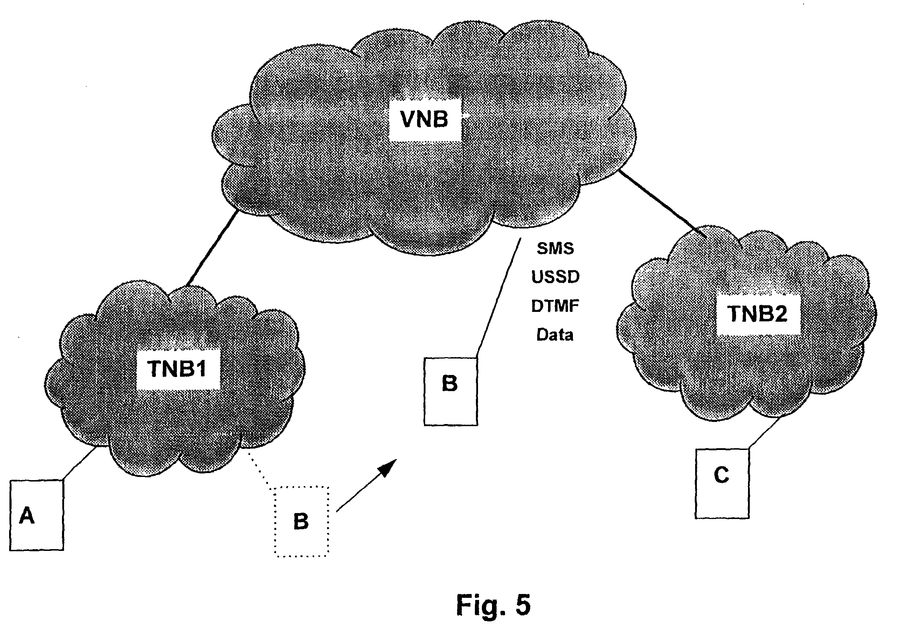

Für das Herunterladen der Vorwahlnummern zu den Teilnehmerkommunikationsendgeräten A, B bzw. C ist erfindungsgemäß ein Datenbanksystem vorgesehen, welches in einem oder in mehreren Netzen oder Netzteilen angesiedelt sein kann. Ferner muß ein Rechner bei Bedarf auf diese Datenbank zurückgreifen und die entsprechenden Daten an den Teilnehmer über geeignete Übertragungswege schicken und so die Datensätze im Endgerät A, B bzw. C aktualisieren. Die Übertragung ist zum Beispiel über Signalisierungen wie SMS, USSD, über Datenkanäle wie 9.6kbit/s usw. sowie über DTMF-Töne möglich (Fig. 5). Eine Voraussetzung hierfür ist, daß das Endgerät A, B bzw. C so konzipiert ist, daß ein Betreiben sowohl über das TNB-Netz als auch über das VNB-Netz möglich ist. Solche Endgeräte sind schon bekannt und werden als Dual-Mode-Endgeräte oder Multi-Mode-Endgeräte bezeichnet.

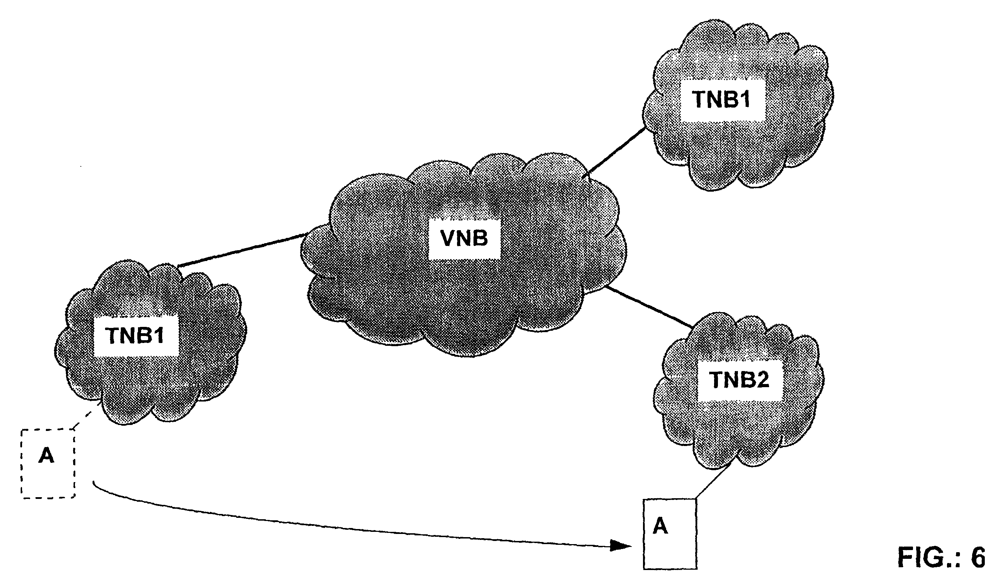

In Fig. 6 ist der Ortswechsel eines Teilnehmers schematisch dargestellt. Der Teilnehmer A, ursprünglich in TNB1 angeordnet, wechselt seinen Aufenthaltsort und wird somit in TNB2 versorgt.

Teilnehmer B ist nach wie vor in TNB2 angeordnet.

Die oben erwähnten Vorwahllisten und die dazu gehörigen Zuordnungsprofile sind nun für einen Verbindungsaufbau aus der neuen Örtlichkeit nicht mehr optimal eingestellt. Die Erfindung sieht deshalb das folgende Verfahren vor:

Zunächst erfolgt bei einem Ortswechsel mit einem derartig ausgeführten Telekommunikationsgerät eine Meldung an das Mobilfunknetz. Diese Meldung erhält alle wichtigen Daten, um ankommende Rufe richtig an den Teilnehmer, vorliegend A, zustellen zu können. So kann zum Beispiel anhand der CLI festgestellt werden, wo sich der Teilnehmer zur Zeit der erfolgten Meldung befindet. Die Information kann dazu genutzt werden, um die Datensätze in der Datenbank neu zu überprüfen und bei Bedarf neue Vorwahllisten für das Endgerät A zu errechnen. Sollte der Teilnehmer A sich bereits an diesem Ort aufgehalten und Zuordnungsprofile gespeichert haben, die für Telefonverkehr aus dem neuen Ort heraus zugrundegelegt werden müssen, so wird durch automatische Erkennung und Anpassung eine optimale Konstellation geschaffen, aus der der Endteilnehmer A wieder ohne Mehraufwand die günstigste Verbindung automatisch aufbauen kann.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

| **Bezugszeichenliste Abkürzungsverzeichnis** | |
|---|---|
| 1 | Festnetz, Ortsnetz |
| 1a | " , " |
| 1b | " , " |
| 2 | Mobilfunknetz |
| 3 | Netzverbindung |
| 3a | " |
| 3b | " |
| 4 | " |
| 4a | " |
| 4b | " |
| 5 | Vermittlungszentrale |
| 5a | " |
| 5b | " |
| 6 | " |
| 6a | |
| 6b | " |
| 7 | Gebührenerfassungsstelle |
| 8 | Teilnehmerendgerät |
| 9 | " |
| 10 | " |
| 11 | " |
| 12 | Kommunikationsverbindung, Telekommunikationsverbindung |
| 13 | " , " |
| 14 | " , " |
| 15 | Fernverbindung |
| 16 | Telekommunikationsverbindung |
| | |
| A | Telekommunikationsendgerät |
| B | " |
| C | " |
| | |
| TNB1 | Teilnehmernetz |
| TNB2 | " |
| TNB3 | " |
| | |
| VNB1 | Vermittlungsnetzbetreiber |
| VNB2 | " |
| VNB3 | " |
| | |
| AB | Anrufbeantworter |
| ACD | Automatic Call Distribution |
| A-CLI | |
| AdC | Administration Center |
| AdC-Command | |
| AdC-Command Interface | |
| av | average |
| BH | Busy Hour |
| BHCA | Busy Hour Call Attemps |
| BSC | Base Station Controller |
| BTS | Base Transceiver Station |
| Call record type | |
| Call Ticket | |
| CASS | Customer Administration and Services System |
| CATV-Kabel | |
| CC | Credit Card |
| CCard | Credit Card |
| | |
| Central Memory Tree | |
| Selection Analysis | |
| CF | Call Forwarding |
| CF-Leg | |
| CF-Fall | |
| CDR | Call Data Record |
| CLI | Calling Line Identity |
| CLIP | Calling Line Identification Presantation |
| CLIR | Calling Line Identification Restriction |
| cpc | calling party category |
| cpc ordinary | |
| Credit Card System | Kreditkartensystem |
| CSC | Customer Service Center |
| CTS | |
| DAT-Tape | Digital Audio Tape |
| DECT | |
| DTMF | Dual Tone Multi Frequency |
| dummy Ansage | |
| EGN | Einzelgesprächsnachweis |
| EoY | End of Year |
| E-Plus Subscription | |
| EPM | E-Plus Mobilfunk |
| EPS | E-Plus Service |
| Erl | Erlang |
| ExpDate | Expiry Date |
| Forwarding indicators | |
| Forwarding-Leg B-C | |
| Fraud | |
| ftam | file transfer access and management |
| ftp | file transfer protocol |
| | |
| GC | Green Card =Wiederaufladbare Telefonkarte Eigenname |
| GC-WA | Green Card - Workaround |
| GICC | German ISO-8583 Credit Card |
| GSM | Group Special Mobile |
| GZS | Gesellschaft für Zahlungssysteme |
| HLR | Home Location Register |
| HLR barred | |
| Hotline | |
| HP01 | Rechner für Applikation Workaround |
| ID | Identification |
| IMSI | International Mobile Subscriber Identity |
| IN | Intelligent Network |
| IP | Intelligent Peripheral |
| ISDN | |
| IVR | Interactive Voice Response |
| LAN | Local Area Network |
| MAIS | Marketing Informationssystem |
| MAP | Mobile Application Part |
| MO | Mobile Originated |
| MOC | Mobile Originated Call |
| MSC | Mobile Switching Center |
| MSC-CDR | |
| MSISDN | Mobile Subscriber ISDN |
| MTC | |
| NIM | Network Interface Manager |
| NO | Network Operator |
| OCCF | Operator Controlled Call Forwarding |
| Offset | |
| OMC | Operation and Maintenance Center |
| OMC-LAN | |
| Ordinary subscriber | |
| | |
| overflow bzw. night transfer announcement | |
| | |
| Payphone | |
| | |
| pcs | pieces |
| | |
| PIN | Personal Identification Number |
| PLZ | Postleitzahl |
| PoS | Point of Sale |
| Posting date | |
| Premium Rate Number | |
| PSTN | Public Switched Telephone Network |
| PUK | Personal Unblocking Key (associated to the |
| | |
| Queueing | SIM card) |
| SAP | Standard Applikations Programm |
| sec | second |
| SecNo | Security Number |
| SIM | Subscriber Identity Module |
| SMS | |
| SMSC | Short Message Service Center |
| SMT | Short Message Terminated |
| SP | Service Provider |
| SS7 | Signalling System No. 7 |
| Spec. | Specification |
| Subscriber data | |
| SubState | Subscription State |
| tbd | |
| TC | Tariff Class |
| TC=62 | |
| | |
| TCP/IP | Transmission Control Protocol/Internet Protocol |
| | |
| Timeguard | |
| | |
| TM | Tariff Model |
| TN, Tin. | Teilnehmer |
| USSD | |
| VANG | Verbal Announcement Generator |
| VASS | Value Added Services System |
| VASS barred | |
| WA | Workaround (of the AdC) |
| VMB | Voicemail Box |
| VMS | Voicemail System |
| VMSC | Voicemail Service Center |
| Voucher | |
| Voucher data | |
| VU | Vertriebsunterstützung (Abteilung) |
| WA | Workaround |
| 17799 + GC-Rufnummer | |

## Patentansprüche

1. Verfahren zum Abrechnen von Gebühren in Telekommunikationsnetzen, wobei zum gemeinsamen Abrechnen von Telefongebühren, die in einem aus wenigstens einem Festnetz (1) und mindestens einem Mobilfunknetz (2) verknüpften Netz bei einer Telekommunikationsverbindung zwischen wenigstens zwei Telekommunikationsendgeräten (8, 10) anfallen, die Gebühren von wenigstens einem vorausbezahlten und wiederaufladbaren Gebührenkonto in einem oder in mehreren der miteinander verbundenen Netze (1, 2) abgebucht werden, wobei die jeweiligen Festnetze (1) und die Mobilfunknetze (2) über jeweils mindestens einen, vorzugsweise über mehrere Netzverbindungspunkte (POI) miteinander verbunden werden, und daß die Verbindung von Teilnehmerendgeräten (8, 9 bzw. 10, 11) in jedem der miteinander verknüpften Netze (1, 2) über jeweils mindestens eine Vermittlungszentrale (5, 6) vorgenommen wird, wobei in den Mobilfunknetzen (2) und/oder den Festnetzen (1a, 1b) je mindestens eine Gebührenerfassungsstelle (7) eingeschaltet ist, über die die Gebühren in den verknüpften Netzen (1, 2) erfaßt werden und daß jedes Teitnehmerendgerät (8, 9 bzw. 10, 11) mit einer der Vermittlungszentralen (5, 6) über eine Telekommunikationsverbindung (12, 13 bzw. 14) kommuniziert und daß für jede Verbindung aus einem Teilnehmerregister, das zum Beispiel im Mobilfunknetz (2) angesiedelt ist, spezifische Daten des betreffenden Teilnehmerendgerätes (8, 9 bzw. 10, 11) abgefragt werden, die in die Gebührenberechnung einbezogen werden, wobei eine Verbindung aus dem Festnetz (1) oder dem Mobilfunknetz (2), die nicht durch ein Guthaben abgedeckt ist, dadurch verhindert wird, daß die Übertragung der Daten an die Gebührenerfassungsstelle (7) und die Anforderung der Teilnehmerdaten aus der Datenbank bereits bei der Anforderung einer Verbindung erfolgt, und daß bei fehlendem Guthaben der Aufbau der geforderten Verbindung unterbleibt oder eine Verbindung zum CSC (Customer Service Center) hergestellt wird, wobei eine dem Teilnehmer zugeordnete Festnetz- oder Mobilfunkrufnummer als Referenznummer in einem Datensatz eingetragen wird.

2. Verfahren nach Anspruch 1, **dadurch gekennzeichnet, daß** die Zuordnung der Mobilfunk- und/oder Festnetznummern zeitlich und/oder geographisch bedingt durch die Mobilität des Teilnehmers verschiedenen Zuordnungsprofilen (Ort, Endteil, usw.) durchgeführt wird.

3. Verfahren nach Anspruch 1 oder 2, **dadurch gekennzeichnet, daß** die Rufnummernzuordnung als auch die Zuordnungsprofile (Ort, Zeit oder dergleichen) durch den Kunden netzübergreifend selbständig verwaltet werden (Selbstadministration), wobei zwecks Selbstadministration durch den Kunden für jeden Kunden ein Datensatz erstellt wird, der eine oder mehrere Mobilfunkrufnummern mit einer oder mehreren Festnetzrufnummern miteinander verknüpft, wobei die Rufnummern in Listen gespeichert und jederzeit vom Kunden selbst aus dem Festnetz (1) oder aus dem Mobilfunknetz (2) jeweils aus der eigenen oder aus einer fremden Telekommunikationseinrichtung geändert, aktiviert und deaktiviert werden.

4. Verfahren nach Anspruch 1 oder einem der darauffolgenden Ansprüche, **dadurch gekennzeichnet, daß** ein Benutzer eines Endgerätes (8, 9, 10, 11, A, B, C) den Verbindungsnetzbetreiber (VNB) über eine dauerhafte Voreinstellung (Pre-Selection) frei und flexibel (Call by Call) auswählt, wobei jedes Telekommunikationsendgerät (8, 9, 10, 11, A, B, C), das eine Verbindung zu einem Anschluß in einem anderen Teilnehmernetz aufbauen will, dies mit Hilfe einer Verbindungsnetzbetreiberkennzahl durchführt.

5. Verfahren nach Anspruch 1 oder einem der darauffolgenden Ansprüche, **dadurch gekennzeichnet, daß** mehrere Rufnummern aus dem Mobilfunk- und aus dem Festnetz (2 bzw. 1) ein gemeinsames, wiederaufladbares Guthabenkonto für vorausbezahlte Telekommunikationsverbindungen nutzen.

6. Verfahren nach Anspruch 3 oder einem der darauffolgenden Ansprüche, **dadurch gekennzeichnet, daß** die Administration der Daten über eine zum Beispiel kostenlose Mobilfunknummer und/oder über eine entsprechende Service-Nummer aus dem Festnetz vorgenommen wird, während die Authentisierung des Kunden über CLI und/oder eine persönliche Geheimnummer erfolgt (PIN).

7. Verfahren nach Anspruch 1 oder einem der darauffolgenden Ansprüche, **dadurch gekennzeichnet, daß** zum Aufladen vom Mobilfunknetz folgende Verfahrensschritte durchgeführt werden:
1. zum Aufladen des Mobilfunk-Festnetz-Konto (MFK) wählt der Kunde von seinem Endgerät (Handy) eine separate, kostenlose Servicenummer; dadurch wird eine Verbindung zum entsprechenden System hergestellt;
2. der Kunde wählt per Menü den Punkt "Aufladung über Kreditkarte";
3. das System informiert den Kunden, daß er eine Aufladung zu einem bestimmten Betrag, zum Beispiel DM 100,--, oder auch andere Beträge, durchführen wird, so daß die Ansage flexibel gestaltet werden kann;
4. tritt durch die aktuelle Aufladung eine Überschreitung der maximalen Guthabengrenze des aufzuladenden MFK ein, so wird die Aufladung gegebenenfalls zurückgewiesen;
5. die Identifikation des Anrufers erfolgt über MSISDN, und der Kunde muß seine Geheimzahl eingeben;
6. der Kunde macht folgende Eingaben:
- Kreditkarten-Nummer
- Verfallsdatum der Kreditkarte
7. das System prüft die Zuordnung MSISDN und Kreditkarten-Nummer;
8. sofern diese Prüfung erfolgreich ist, schaltet das System eine Autorisierungsanfrage bei der Sperrdatei (Batch-Verfahren); die Sperrdatei wird täglich aktualisiert;
9. sofern der Kunde nicht in der Sperrdatei aufgeführt ist, erhält die Gebührenerfassungsstelle eine Freigabe für die Aufladung;
10. das System überträgt den Betrag auf das Konto des wiederaufladbaren MFK des Kunden;
11. sobald die letzte Eingabenziffer korrekt eingegeben wurde, gilt die Aufladung als vom Kunden abschließend initiiert; der Kunde erhält am Ende des Gesprächs oder später (z. B. beim nächsten abgehenden Gespräch) eine Mitteilung, ob die Aufladung erfolgreich war oder nicht, zum Beispiel:
a) Ihre Aufladung war erfolgreich; Ihr Guthaben beträgt xy DM.
oder
b) Ihre Aufladung war nicht erfolgreich; Ihr Guthaben beträgt xy
DM;
oder eine andere Ansage; sofern der Kunde nicht auflegt, hört er die Ansage nach dem Gespräch; sofern er vorher auflegt oder keine Abdeckung mehr hat, hört er die Ansage bei seinem nächsten abgehenden Telefonanruf.

8. Verfahren nach Anspruch 1 oder einem der darauffolgenden Ansprüche, **dadurch gekennzeichnet, daß** zur Sicherheitsprüfung durch das System folgende Verfahrensschritte durchgeführt werden:
a) Aufladung nur vom Handy (Identifizierung der Telefonnummer MSISDN);
b) Eingabe der Geheimzahl;
c) Prüfung der Zuordnung: MSISDN und Kreditkarten-Nummer;
d) Autorisierung offline, z. B. über die Sperrdatei, oder online.

9. Verfahren nach Anspruch 1 oder einem der darauffolgenden Ansprüche, **dadurch gekennzeichnet, daß** eine automatische Auswahl der zur Zeit des Gesprächsaufbaus für den Kunden und für die in diese Verbindung involvierten Netze zwecks Erzielung der günstigsten Konstellation vorgenommen wird, derart, daß die Vorwahlnummern der möglichen VNB in das Endgerät des Kunden heruntergeladen und gespeichert werden, wobei gemäß einem Algorithmus bei der Eingabe der Vorwahl der entsprechend für diese Verbindung günstigste VNB gesucht und die Verbindung zu diesem mit der gewünschten Zieladresse zum gewünschten Zielteilnehmernetz weitergeleitet wird.

10. Verfahren nach Anspruch 1 oder einem der darauffolgenden Ansprüche, **dadurch gekennzeichnet, daß** zum Aufladen vom Festnetz folgende Verfahrensschritte durchgeführt werden:
1. zum Aufladen des Mobilfunk-Festnetz-Konto (MFK) wählt der Kunde von seinem Endgerät (Festnetztelefon) eine separate, kostenlose Servicenummer; dadurch wird eine Verbindung zum entsprechenden System hergestellt;
2. der Kunde wählt per Menü den Punkt "Aufladung über Kreditkarte";
3. das System informiert den Kunden, daß er eine Aufladung zu einem bestimmten Betrag, zum Beispiel DM 100,--, durchführen wird; selbstverständlich sind auch andere Beträge möglich, so daß die Ansage flexibel gestaltet werden kann;
4. tritt durch die aktuelle Aufladung eine Überschreitung der maximalen Guthabengrenze des aufzuladenden MFK ein, so wird die Aufladung gegebenenfalls zurückgewiesen;
5. die Identifikation des Anrufers erfolgt über MSISDN, und der Kunde muß seine Geheimzahl eingeben;
6. der Kunde macht folgende Eingaben:
- Kreditkarten-Nummer
- Verfallsdatum der Kreditkarte
7. das System prüft die Zuordnung MSISDN und Kreditkarten-Nummer;
8. sofern diese Prüfung erfolgreich ist, schaltet das System eine Autorisierungsanfrage bei der Sperrdatei (Batch-Verfahren); die Sperrdatei wird täglich aktualisiert;
9. sofern der Kunde nicht in der Sperrdatei aufgeführt ist, erhält die Gebührenerfassungsstelle eine Freigabe für die Aufladung;
10. das System überträgt den Betrag auf das Konto des wiederaufladbaren MFK des Kunden;
11. sobald die letzte Eingabenziffer korrekt eingegeben wurde, gilt die Aufladung als vom Kunden abschließend initiiert; der Kunde erhält am Ende des Gesprächs oder später (z. B. beim nächsten abgehenden Gespräch) eine Mitteilung, ob die Aufladung erfolgreich war oder nicht, zum Beispiel:
a) Ihre Aufladung war erfolgreich; Ihr Guthaben beträgt xy DM;
oder
b) Ihre Aufladung war nicht erfolgreich; Ihr Guthaben beträgt xy
DM;
oder eine andere Ansage; sofern der Kunde nicht auflegt, hört er die Ansage nach dem Gespräch; sofern er vorher auflegt oder keine Abdeckung mehr hat, hört er die Ansage bei seinem nächsten abgehenden Telefonanruf.

11. Vorrichtung zum Durchführung des Verfahrens nach Anspruch 1 oder einem der darauffolgenden Ansprüche, wobei zum gemeinsamen Abrechnen von Telefongebühren, die in einem aus wenigstens einem Festnetz (1) und mindestens einem Mobilfunknetz (2) verknüpften Netz bei einer Telekommunkationsverbindung zwischen wenigstens zwei Telekommunikationsendgeräten (8, 10) anfallen, die Gebühren von wenigstens einem vorausbezahlten und wiederaufladbaren Gebührenkonto in einem oder in mehreren der miteinander verbundenen Netze (1, 2) abbuchbar sind, wobei die jeweiligen Festnetze (1) und die Mobilfunknetze (2) über jeweils mindestens einen, vorzugsweise über mehrere Netzverbindungspunkte (POI) miteinander verbindbar sind, und daß die Verbindung von Teilnehmerendgeräten (8, 9 bzw. 10, 11) in jedem der miteinander verknüpften Netze (1, 2) über jeweils mindestens eine Vermittlungszentrale (5, 6) vornehmbar ist, wobei in den Mobilfunknetzen (2) und/oder den Festnetzen (1a, 1b) je mindestens eine Gebührenerfassungsstelle (7) eingeschaltet ist, über die die Gebühren in den verknüpften Netzen (1, 2) erfaßbar sind, und daß jedes Teilnehmerendgerät (8, 9 bzw. 10, 11) mit einer der Vermittlungszentralen (5, 6) über eine Telekommunikationsverbindung (12, 13 bzw. 14) kommuniziert, **dadurch gekennzeichnet, daß** für jede Verbindung aus einem Teilnehmenregister, das zum Beispiel im Mobilfunknetz (2) angesiedelt ist, spezifische Daten des betreffenden Teilnehmerendgerätes (8, 9 bzw. 10, 11) abfragbar sind, die in die Gebührenberechnung einbeziehbar sind, wobei eine Verbindung aus dem Festnetz (1) oder dem Mobilfunknetz (2), die nicht durch ein Guthaben gedeckt ist, dadurch verhinderbar ist, daß die Übertragung der Daten an die Gebührenerfassungsstelle (7) und die Anforderung der Teilnehmerdaten aus der Datenbank bereits bei der Anforderung einer Verbindung erfolgt und daß bei fehlendem Guthaben der Aufbau der geforderten Verbindung unterbleibt oder eine Verbindung zum Customer Service Center (CSC) herstellbar ist, wobei eine dem Teilnehmer zugeordnete Festnetz- oder Mobilfunknummer als Referenznummer in einem Datensatz eintragbar ist.

12. Vorrichtung nach Anspruch 11, **dadurch gekennzeichnet, daß** das Festnetz (1) und/oder das Mobilfunknetz (2) aus jeweils zwei oder mehreren Ortsnetzen (1a, 1b) bestehen, wobei sowohl die Festnetze (1) als auch die Mobilfunknetze (2) jeweils durch mehrere Netzverbindungspunkte (POI) miteinander gekoppelt sind und in mindestens dem Mobilfunknetz (2) eine Gebührenerfassungsstelle (7) angeordnet ist, die an eine Vermittlungsstelle (6a) angeschlossen ist.

13. Vorrichtung nach Anspruch 11 oder einem der darauffolgenden Ansprüche, mit einem Mobilfunknetz (2) und einem Festnetz (1), die miteinander verknüpft sind, im wesentlichen enthalten NIM, MSC, HLR, VMSC, SMCSC, eine Diensteplattform, zum Beispiel Service Mode, AdC mit Gc-WA, CSC, BSC, BTS, Kreditkartensystem (Credit Card System) und mindestens einem Handy, das ohne oder mit wiederaufladbarer bzw. wiedernutzbarer Telefonkarte versehen ist.

## Claims

1. Method for calculating charges in telecommunications networks where, for joint calculation of telephone charges which are accumulating in a network interconnected with at least one fixed-line network (1) and at least one mobile network (2) in a telecommunications line between at least two telecommunications terminal devices (8, 10), the charges are debited against at least one prepaid and top up charge account in one or in several of the interconnected networks (1, 2), with the respective fixed-line networks (1) and the mobile networks (2) being interconnected via at least one each, preferably via several points of interconnection (POI), and that the connection of terminal devices (8, 9, or 10, 11) in each of the interconnected networks (1, 2) is effected via at least one each switching centre (5, 6), with at least one each billing centre (7) being connected in the mobile networks (2) and/or the fixed-line networks (1a, 1b) via which the charges in the interconnected networks (1, 2) are ascertained, and that each subscriber's terminal device (8, 9, or 10, 11) communicates with one of the switching centres (5, 6) via a telecommunications line (12, 13, or 14) and that, for each connection, specific data of the relevant subscriber's terminal device (8, 9, or 10, 11) which will be included in the billing are interrogated from a subscriber's register which, for instance, is established in the mobile network (2), with a connection from the fixed-line network (1) or the mobile network (2) not covered by a credit balance being prevented by the transmission of the data to the billing centre (7) and the request for the subscriber's data from the data bank system taking place already upon the request for a line and that, in case of lack of credit balance, the establishment of the required connection does not happen or that a connection to the CSC (Customer Service Centre) is established, with a fixed-line or mobile network call number assigned to the subscriber being entered into a data record as a reference number.

2. Method as claimed in Claim 1, **characterized in that**, because of the mobility of the subscriber, the assignment of the mobile and fixed-line network call number is carried out to different assignment profiles in terms of time and geographic position (place, terminal part, etc.).

3. Method as claimed in Claim 1 or Claim 2, **characterized in that** both the call number assignment and the assignment profiles (place, time or the like) are administrated by the customer himself in network-overlapping fashion (self-administration), with a data record being created for each customer for the purpose of self-administration by the customer, said data record interconnecting one or several mobile network call numbers with one or several fixed-line network call numbers, and the call numbers being stored in lists which can be altered, activated or deactivated at any time by the customer himself from the fixed-line network (1) or from the mobile network (2), in each case from his own, or from an outside telecommunications facility.

4. Method as claimed in Claim 1 or in any of the following claims, **characterized in that** a user of a terminal device (8, 9, 10, 11, A, B, C) selects the trunk network operator (VNB) via a permanent pre-selection freely and flexibly (call by call), with each telecommunications terminal device (8, 9, 10, 11, A, B, C) wishing to set up a call to a line in another subscriber's network doing so with the aid of a trunk network operator code number.

5. Method as claimed in Claim 1 or in any of the following claims, **characterized in that** several call numbers from the mobile and from the fixed-line networks (2 or 1) make use of a joint, top-up credit account for prepaid telecommunications lines.

6. Method as claimed in Claim 3 or in any of the following claims, **characterized in that** administration of the data is effected, for instance, via a free mobile number and/or via a corresponding service number from the fixed-line network, while authentication of the customer takes place via Calling Line Identity (CLI) and/or a Personal Identification Number (PIN).

7. Method as claimed in Claim 1 or in any of the following claims, **characterized in that** the following steps are taken for topping up from the mobile network:
1. to top up the mobile/fixed-line network account (MFK), the customer dials a separate, free service number from his terminal device (mobile phone), thereby making a connection action to the corresponding system;
2. the customer selects the function "Topping Up by Credit Card" using the Menu;
3. the system informs the customer that it will perform topping up to a certain amount, e.g. DM 100.--, or also other amounts so that the announcement can be structured flexibly;
4. if the actual topping up causes the maximum credit limit of the MFK to be topped up to be exceeded, topping up could be rejected;
5. the identification of the caller is effected via MSISDN, and the customer will have to enter his secret number;
6. the customer makes the following entries:
- Credit card number
- Expiry date of credit card
7. the system checks the MSISDN and credit card number assignment;
8. if this check is successful, the system will place an authorization request with the blocking file (batch procedure); the blocking file is updated on a daily basis;
9. provided the customer is not listed in the blocking file, the billing centre (7) will receive a clearance for topping up;
10. the system transfers the amount into the account of the top-up mobile/fixed-line network account (MFK) of the customer;
11. as soon as the last input digit has been entered correctly, topping up is deemed to have been finally initiated by the customer; at the end of the call or later (e.g. with the next outgoing call), the customer will receive a message informing him whether or not topping up has been successful; for instance:
a) your topping up was successful; your credit balance is xy DM,
or
b) your topping up was unsuccessful; your credit balance is xy DM;
or another announcement; if the customer does not hang up, he will hear the announcement after the call; if he hangs up earlier or does not have covering anymore, he will hear the announcement with his next outgoing telephone call.

8. Method as claimed in Claim 1 or in any of the following claims, **characterized in that** the following steps are performed by the system as a security check:
a) topping up from the mobile phone only (identification of the Mobile Subscriber ISDN telephone number);
b) entry of the secret number;
c) verification of assignment: MSISDN and credit card number;
d) offline authorization, e.g. via the blocking file, or online.

9. Method as claimed in Claim 1 or in any of the following claims, **characterized in that** an automatic selection of the most favourable constellation available at the time of the call setup and in terms of the networks involved in this connection, in such a way that the dialling codes of the possible trunk network operators (VNBs) are downloaded into the terminal device of the customer and stored, with the corresponding, most favourable trunk network operator (VNB) for this connection being searched for according to an algorithm while entering the dialling code, and the call being transferred to this VNB with the desired destination address to the desired destination subscriber's network.

10. Method as claimed in Claim 1 or in any of the following claims, **characterized in that**, for topping up from the fixed-line network, the following steps are performed:
1. to top up the mobile/fixed-line network account (MFK), the customer dials a separate, free service number from his terminal device (fixed-line phone), thereby making a connection action to the corresponding system;
2. the customer selects the function "Topping Up by Credit Card" using the Menu;
3. the system informs the customer that it will perform topping up to a certain amount, e.g. DM 100.--; other amounts are, of course, also possible so that the announcement can be structured flexibly;
4. if the actual topping up causes the maximum credit limit of the MFK to be topped up to be exceeded, topping up could be rejected;
5. the identification of the caller is effected via Mobile Subscriber ISDN, and the customer will have to enter his secret number;
6. the customer makes the following entries:
- Credit card number
- Expiry date of credit card
7. the system checks the MSISDN and the credit card number assignment;
8. if this check is successful, the system will place an authorization request with the blocking file (batch procedure); the blocking file is updated on a daily basis;
9. provided the customer is not listed in the blocking file, the billing centre (7) will receive a clearance for topping up;
10. the system transfers the amount into the account of the top-up mobile/fixed-line network account (MFK) of the customer;
11. as soon as the last input digit has been entered correctly, topping up is deemed to have been finally initiated by the customer; at the end of the call or later (e.g. with the next outgoing call), the customer will receive a message informing him whether or not topping up has been successful; for instance:
a) your topping up was successful; your credit balance is xy DM,
or
b) your topping up was unsuccessful; your credit balance is xy DM;
or another announcement; if the customer does not hang up, he will hear the announcement after the call; if he hangs up earlier or does not have covering anymore, he will hear the announcement with his next outgoing telephone call.

11. Device for putting into practice the method as claimed in Claim 1 or in any of the following claims, where, for joint calculation of telephone charges which are accumulating in a telecommunications connection between at least two telecommunications terminal devices (8,10) in a network interconnected with at least one fixed-line network (1) and at least one mobile network (2) the charges can be debited against at least one prepaid top-up charge account in one or in several of the interconnected networks (1, 2), with the respective fixed-line networks (1) and the mobile networks (2) being interconnective via at least one each, preferably via several points of interconnection (POI), and that the connection of terminal devices (8, 9, or 10, 11) in each of the interconnected networks (1, 2) can be made via at least one each switching centre (5, 6), with at least one each automatic message accounting point (7) being placed in the mobile networks (2) or the fixed-line networks (1a, 1b) via which the charges in the interconnected networks (1, 2) can be ascertained, and that each terminal device (8, 9 and/or 10, 11) communicates with one of the switching centres (5, 6) via a telecommunications line (12, 13, or 14); **characterized in that** for each connection specific data of the relevant subscriber's terminal device (8, 9, or 10, 11) which can be included in the billing can be interrogated from a subscriber's register which, for instance, is established in the mobile network (2), and a connection from the fixed-line network (1) or the mobile network (2) not covered by a credit balance can be prevented by the transmission of the data to the automatic message accounting point (7) and the request for the subscriber's data from the data bank system taking place already upon the request for a line and that, in case of lack of credit balance, the establishment of the required connection does not happen or that a connection to the CSC (Customer Service Centre) can be established, permitting a fixed-line or mobile network call number assigned to the subscriber to be entered into a data record as a reference number.

12. Device as claimed in Claim 11, **characterized in that** the fixed-line network (1) and/or the mobile network (2) consist or consists of two each or several local networks, with both the fixed-line networks (1) and the mobile networks (2) each being interconnected by several points of interconnection (POI) and a billing centre (7) connected to an exchange (6a) being arranged in at least the mobile network (2).

13. Device as claimed in Claim 11 or in any of the following claims, with a mobile network (2) and a fixed-line network (1) which are interconnected, essentially including NIM (Network Interface Manager), MSC (Mobile Switching Centre), HLR (Home Location Register), VMSC (Voicemail Service Centre), SMCSM (Short Message Service Centre), a service platform, e.g. Service Mode, AdC (Administration Centre) with Gc-WA (Green Card Workaround), CSC (Customer Service Centre), BSC (Base Station Controller), BTS (Base Transceiver Station), Credit Card System, and with at least one mobile phone without or with top-up and/or reusable telephone card.

## Revendications

1. Procédé pour le décompte de taxes dans des réseaux de télécommunication, dans lequel, en vue d'un décompte commun des taxes téléphoniques entraînées lors d'une communication téléphonique entre au moins deux appareils de télécommunication (8; 10) dans un réseau interconnecté composé d'au moins un réseau fixe (1) et d'au moins un réseau mobile (2), les taxes sont décomptées d'au moins un compte de décompte es taxés prépayé et rechargeable dans un ou dans plusieurs réseaux interconnectés (1, 2), les réseaux fixes (1) et les réseaux mobiles respectifs (2) étant connectés par au moins un point de connexion des réseaux (POI), de préférence par plusieurs points de connexion des réseaux, la connexion des postes terminaux d'abonné (8, 9 ou 10, 11) dans chacun des réseaux interconnectés (1, 2) étant assurée par au moins une centrale de connexion (5, 6), au moins un centre d'enregistrement des taxes (7) étant respectivement prévu dans les réseaux mobiles (2) et/ou les réseaux fixes (1a, 1b), permettant l'enregistrement des taxes dans les réseaux interconnectés (1, 2), et chaque poste terminal d'abonné (8, 9 ou 9, 10) communiquant avec une des centrales de connexion (5, 6) par l'intermédiaire d'une liaison de télécommunication (12, 13 ou 14), des données spécifiques concernant le poste d'abonné correspondant (8, 9 ou 10,11) étant extraites d'un registre des abonnés, se trouvant par exemple dans le réseau mobile (2), ces données étant incluses dans le décompte des taxes, une communication provenant du réseau fixe (1) ou du réseau mobile (2), non couverte par un crédit, étant empêchée par le fait que la transmission des données au centre d'enregistrement des taxes (7) et l'extraction des données de l'abonné de la banque de données sont déjà réalisées lors de la demande d'une communication; et l'établissement de la communication demandée étant empêché en cas d'un manque de crédit, ou entraînant la communication avec le CSC (Customer Service Centre), un numéro d'appel du réseau fixe ou du réseau téléphonique mobile affecté à l'abonné étant enregistré à cet effet comme numéro de référence dans un ensemble de données.

2. Procédé selon la revendication 1, **caractérisé en ce que** l'affectation des numéros du réseau mobile et/ou du réseau fixe est réalisée sur une base de temps et/ou géographique par suite de la mobilité de l'abonné en fonction de différents profils d'affectation (lieu, poste terminal, etc.).

3. Procédé selon les revendications 1 ou 2, **caractérisé en ce que** l'affectation du numéro d'appel tout comme les profils d'affectation (lieu, temps ou facteurs similaires) peuvent être administrés de manière autonome par l'abonné, au-delà des réseaux (auto-administration), un ensemble de données, interconnectant un ou plusieurs numéros de réseau mobile avec un ou plusieurs numéros de réseau fixe étant établi pour chaque client en vue de l'auto-administration par le client, les numéros d'appel étant enregistrés dans des listes, que le client peut lui-même changer, activer et désactiver à partir du réseau fixe (1) ou du réseau mobile (2), chaque fois de l'installation de télécommunication propre ou d'une installation d'un tiers.

4. Procédé selon la revendication 1 ou selon l'une des revendications suivantes, **caractérisé en ce que** qu'un utilisateur d'un poste terminal (8, 9, 10, 11, A, B, C) sélectionne de manière libre et flexible (call by call) l'exploitant du réseau de communication (VNB) par l'intermédiaire d'une présélection durable (pre-selection), chaque poste terminal (8, 9, 10, 11, A, B, C), désirant établir une communication avec un raccordement dans un autre réseau d'abonné réalisant ceci par l'intermédiaire d'un indice de l'exploitant du réseau de connexion.

5. Procédé selon la revendication 1 ou selon l'une des revendications suivantes, **caractérisé en ce que** plusieurs numéros d'appel du réseau mobile ou du réseau fixe (2 ou 1) utilisent un compte de crédit commun pouvant être utilisé pour des communications téléphoniques à prépaiement.

6. Procédé selon la revendication 3 ou selon l'une des revendications suivantes, **caractérisé en ce que** l'administration des données est réalisée par exemple par un numéro de mobile gratuit et/ou un numéro de service correspondant du réseau fixe, l'authentification du client se faisant par CLI et/ou un numéro secret personnel (PIN).

7. Procède selon la revendication 1 ou selon l'une des revendications suivantes, **caractérisé en ce que** le rechargement à partir du réseau mobile comprend les procédures suivantes:
1. pour recharger le compte du réseau mobile et du réseau fixe (MFK), le client appelle un numéro de service séparé gratuit avec son mobile; une communication est ainsi établie avec le système correspondant;
2. le client choisit dans le menu le point "rechargement par carte de crédit";
3. le système informe le client qu'il va procéder à un rechargement pour un certain montant, par exemple 100,-- DM, ou d'autres montants, assurant la flexibilité de l'énoncé;
4. lorsque le chargement en cours entraîne un dépassement de la limite de crédit maximale du MFK devant être rechargé, le rechargement peut être refusé;
5. l'identification de l'auteur de l'appel est assurée par MSISDN, le client devant entrer un numéro secret;
6. le client entre les données suivantes:
- numéro de carte de crédit
- date d'expiration de la carte de crédit
7. le système contrôle l'affectation du MSISDN et du numéro de la carte de crédit;
8. en cas de succès de ce contrôle, le système adresse une demande d'autorisation à un fichier de blocage (procédé par lots); le fichier de blocage est remis à jour quotidiennement;
9. dans la mesure où le client ne figure pas dans le fichier de blocage, le centre d'enregistrement des taxes reçoit l'autorisation de procéder à un rechargement;
10. le système vire le montant sur le compte du MFK rechargeable du client;
11. dès l'entrée correcte du dernier chiffre, le rechargement est considéré comme initialisé définitivement par le client; à la fin de l'appel ou à un moment ultérieur (p.ex. lors du prochain appel), le client est informé sur le succès ou l'échec du chargement, par exemple de la façon suivante:
a) votre rechargement a réussi; votre crédit est de xy DM,
ou
b) votre rechargement a échoué; votre crédit est de xy DM;
ou par un autre énoncé; dans la mesure où le client ne raccroche pas, il entend l'énoncé après la communication téléphonique; dans la mesure où il raccroche avant et qu'il ne dispose plus de couverture, il entend l'énoncé lors de l'appel suivant.

8. Procédé selon la revendication 1 ou selon l'une des revendications suivantes, **caractérisé en ce qu'**en vue du contrôle de sécurité, il y a exécution des procédures suivantes par le système:
a) chargement exclusif à partir du mobile (identification du numéro de téléphone MSISDN);
b) entrée du numéro secret;
c) contrôle de l'affectation du MSISDN et du numéro de la carte de crédit;
d) autorisation hors ligne, par exemple par l'intermédiaire du fichier de blocage, ou en ligne.

9. Procédé selon la revendication 1 ou selon l'une des revendications suivantes, **caractérisé en ce q**'une sélection automatique de la constellation la plus avantageux pour le client et pour les réseaux intervenant pour cette connexion est faite, de sorte que les numéros de l'indicatif des VNB possibles sont déchargés et enregistrés dans le poste terminal du client, le VNB le plus avantageux pour cette communication étant déterminé selon un algorithme lors de l'entrée de l'indicatif, la communication avec celui-ci étant transmise avec l'adresse voulue au réseau d'abonné cible voulu.

10. Procédé selon la revendication 1 ou selon l'une des revendications suivantes, **caractérisé en ce que** les procédures suivantes sont effectuées en vue du rechargement à partir du réseau fixe:
1. pour recharger le compte du réseau mobile et du réseau fixe (MFK), le client appelle avec son poste terminal (téléphone de réseau fixe) un numéro de service séparé gratuit; une communication est ainsi établie avec le système correspondant;
2. le client choisit dans le menu le point "rechargement par carte de crédit";
3. le système informe le client sur le fait qu'il va procéder à un rechargement pour un certain montant, par exemple 100,-- DM; d'autres montants peuvent évidemment aussi être prévus, assurant la flexibilité de l'énoncé;
4. lorsque le rechargement en cours entraîne un dépassement de la limite de crédit maximale du MFK devant être chargé, le rechargement peut être refusé;
5. l'identification de l'auteur de l'appel se fait par MSISDN, le client devant entrer son numéro secret;
6. le client fait les entrées suivantes:
- numéro de carte de crédit
- date d'expiration de la carte de crédit
7. le système contrôle l'affectation du MSISDN et du numéro de la carte de crédit;
8. en cas de succès de ce contrôle, le système adresse une demande d'autorisation au fichier de blocage (procédé par lots); le fichier de blocage est remis à jour quotidiennement;
9. dans la mesure où le client ne figure pas dans le fichier de blocage, le centre d'enregistrement des taxes reçoit l'autorisation de procéder à un rechargement;
10. le système vire le montant sur le compte du MFK rechargeable du client;
11. dès l'entrée correcte du dernier chiffre, le rechargement est considéré comme initialisé définitivement par le client; à la fin de l'appel, ou à un moment ultérieur (par exemple lors du prochain appel) le client est informé sur le succès ou l'échec du chargement, par exemple de la manière suivante:
a) votre chargement a réussi; votre crédit est de xy DM;
ou
b) votre chargement a échoué otre crédit est de xy DM;
ou par un autre énoncé; dans la mesure où le client ne raccroche pas, il entend l'énoncé après l'appel; dans la mesure où il raccroche avant ou qu'il ne dispose plus de couverture, il entend l'énoncé lors du prochain appel.

11. Dispositif permettant l'exécution du procédé selon la revendication 1 ou selon l'une des revendications suivantes, dans lequel, en vue du décompte commun des taxes téléphoniques entraînées lors d'une communication téléphonique entre au moins deux appareils de télécommunication (8, 10) dans un réseau interconnecté composé d'au moins un réseau fixe (1) et d'au moins un réseau mobile (2), les taxes pouvant être décomptées d'au moins un compte de décompte des taxes prépayé et rechargeable dans un ou dans plusieurs des réseaux interconnectés (1, 2), les réseaux fixes respectifs (1) et les réseaux mobiles respectifs (2) pouvant être connectés respectivement par au moins un point de connexion des réseaux, de préférence par plusieurs points de connexion des réseaux (POI), et la connexion des postes terminaux d'abonné (8, 9, ou 10,11) pouvant être assurée dans chacun des réseaux interconnectés (1, 2) par au moins une centrale de connexion (5, 6), les réseaux mobiles (2) et/ou les réseaux fixes (1a, 1b) comportant respectivement au moins un centre d'enregistrement des taxes (7), permettant l'enregistrement des taxes dans les réseaux interconnectés (1, 2), et chaque poste terminal d'abonné (8, 9, ou 10,11) communiquant avec une des centrales de connexion (5, 6) par l'intermédiaire d'une liaison de télécommunication (12, 13 ou 14), **caractérisé en ce que** pour chaque communication, des données spécifiques du poste terminal d'abonné (8, 9 ou 10, 11) peuvent être extraites d'un registre des abonnés, logé par exemple dans le réseau mobile (2), ces données pouvant être incluses dans le décompte des taxes, une communication depuis le réseau fixe (1) ou le réseau mobile (2), non couverte par un crédit, pouvant être empêchée par le fait que la transmission des données au centre d'enregistrement des taxes (7) et l'extraction des données d'abonné de la banque de données sont déjà assurées lors de la demande d'une communication, et qu'en cas d'un manque de crédit, l'établissement de la communication demandée est empêché ou une communication étant établie avec le centre de service des abonnés (CSC), un numéro d'appel du réseau fixe ou du réseau mobile affecté à l'abonné pouvant à cet effet être enregistré dans un ensemble de données.

12. Dispositif selon la revendication 11 **caractérisé en ce que** le réseau fixe (1) et/ou le réseau mobile (2) se composent respectivement de deux ou de plusieurs réseaux locaux (1a, 1b), les réseaux fixes (1) et les réseaux mobiles (2) étant respectivement couplés par plusieurs points de connexion des réseaux (POI), et un service d'enregistrement des taxes (7) existant dans au moins le réseau mobile (2), raccordé à un centre de connexion (6a).

13. Dispositif selon la revendication 11 ou selon l'une des revendications suivantes, comportant un réseau mobile (2) et un réseau fixe (1) interconnectés, contenant pour l'essentiel un NIM, MSC, HLR, VMSC, SMSC, une plate-forme de service, par exemple un Service Mode, AdC avec Gc-WA, CSC, BSC, BTS, un système de carte de crédit (Crédit Card System), et au moins un mobile comportant ou ne comportant pas de carte téléphonique rechargeable ou réutilisable.
